# EUROPÄISCHE PATENTANMELDUNG

(11) **EP 4 538 022 A1**
(43) Veröffentlichungstag der Anmeldung: **16.04.2025**
(21) Anmeldenummer: 24204334.7
(22) Anmeldetag: 02.10.2024
(51) Int. Cl.: B29C 64/118, B29C 48/92, B29C 64/343, B29C 64/393, B33Y 10/00, B33Y 30/00, B33Y 50/02

(54) **VERFAHREN ZUM ERSTELLEN EINER LOKALEN, DYNAMISCHEN UND/ODER GLOBALEN AUSTRAGSCHARAKTERISTIK SOWIE VORRICHTUNG UND ANLAGE HIERZU**

(30) Priorität: 10.10.2023 DE 102023127678
(71) Anmelder: Deutsches Zentrum für Luft- und Raumfahrt e.V., 53227 Bonn-Oberkassel (DE)
(72) Erfinder: Johannsen, Erik, 38442 Wolfsburg (DE); Titze, Maik, 32457 Porta Westfalica (DE); Schmidt, Jan-Uwe Reinhard, 38106 Braunschweig (DE)
(74) Vertreter: Gramm, Lins & Partner Patent- und Rechtsanwälte PartGmbB

(57) **Zusammenfassung**

Verfahren zum Erstellen einer lokalen Austragscharakteristik einer Extrusionseinrichtung, wobei die Extrusionseinrichtung mittels einer durch einen Motor angetriebenen Extrusionsschnecke ein druckfähiges Material an einer Austragsdüse ausgibt, um eine dreidimensionale Struktur aus dem druckfähigen Material zu bilden, und wobei die lokale Austragscharakteristik ein Austragsvolumen des druckfähigen Materials aus der Austragsdüse in Abhängigkeit von einem Drehwinkel der Extrusionsschnecke und/oder einem Vielfachen davon definiert, mit den Schritten:
- Ausgeben des druckfähigen Materials durch Ansteuerung des Motors derart, dass die Extrusionsschnecke eine im Wesentlichen konstante Drehgeschwindigkeit aufweist;
- kontinuierliches Erfassen einer Drehwinkelinformation der Extrusionsschnecke und Hinterlegen der Drehwinkelinformation in einem digitalen Datenspeicher;
- kontinuierliches Erfassen des strangförmig ausgegebenen Materials mittels einer Sensorik umfassend mindestens einen Sensor und Ermitteln des Austragsvolumens des strangförmig ausgegebenen Materials für einen gewissen Strangabschnitt;
- kontinuierliches Zuordnen des ermittelten Austragsvolumen zu einer hinterlegten Drehwinkelinformation der Extrusionsschnecke, und
- Erstellen einer lokalen Austragscharakteristik basierend auf einer Vielzahl von hinterlegten Drehwinkelinformationen und ihren jeweils zugeordneten Austragsvolumen.

## Beschreibung

Die Erfindung betrifft ein Verfahren zum Erstellen einer lokalen Austragscharakteristik einer Extrusionseinrichtung, wobei die Extrusionseinrichtung mittels einer durch einen Motor angetriebenen Extrusionsschnecke ein druckfähiges Material an einer Austragsdüse ausgibt, um eine dreidimensionale Struktur aus dem druckfähigen Material zu bilden.

Die Erfindung betrifft ebenso ein Verfahren zum Erstellen einer dynamischen Austragscharakteristik einer Extrusionseinrichtung, wobei die Extrusionseinrichtung mittels einer durch einen Motor angetriebenen Extrusionsschnecke ein druckfähiges Material an einer Austragsdüse ausgibt, um eine dreidimensionale Struktur aus dem druckfähigen Material zu bilden.

Die Erfindung betrifft ebenso ein Verfahren zum Erstellen einer globalen Austragscharakteristik einer Extrusionseinrichtung, wobei die Extrusionseinrichtung mittels einer durch einen Motor angetriebenen Extrusionsschnecke ein druckfähiges Material an einer Austragsdüse ausgibt, um eine dreidimensionale Struktur aus dem druckfähigen Material zu bilden.

Die Erfindung betrifft außerdem eine Vorrichtung zur Durchführung der Verfahren sowie eine Anlage zum Extrudieren eines druckfähigen Materials.

Mithilfe von generativen Verfahren lassen sich unter Verwendung eines entsprechenden Werkstoffes Bauteile mit einer fast beliebigen Geometrie herstellen. Der 3D-Druck mithilfe eines 3D-Druckers stellt dabei einen sehr bekannten Vertreter der generativen Fertigungsverfahren dar. Dabei wird mithilfe eines 3D-Druckers schichtweise ein schmelzbarer Werkstoff, beispielsweise ein thermoplastischer Kunststoff, gedruckt, wodurch sich am Ende des Verfahrens ein dreidimensionales Bauteil bzw. eine dreidimensionale Struktur ergibt.

Aus der DE 20 2015 004 336 U1 ist eine Vorrichtung zum Auftragen eines Werkstoffes bekannt, der aus einer Mischung zweier einem Druckkopf zugeführten Materialien hergestellt wird.

Diese Form der additiven Fertigung findet immer stärkeren Einzug in industrielle Fertigungsumgebungen. Zu den etablierten Verfahren zählt dabei u.a. die Materialextrusion. Hierbei wird ein (thermoplastisches) Material einem Extrusionsaggregat bzw. einem Extruder zugeführt, aufgeschmolzen und auf ein Substrat aufgetragen, wo das schmelzflüssige, druckfähige Material wieder erstarrt. Das Extrusionsaggregat und/oder Substrat wird hierbei relativ zueinander im Raum bewegt, so dass durch den räumlichen Materialaustrag sukzessive eine dreidimensionale Struktur entsteht. Die Fertigung mit (granulatbasierten) Extrusionsaggregaten basiert derzeit vornehmlich auf Schneckenextrudern, meist in Form von Einschneckensystemen.

Diese Extrusionsaggregate werden häufig an eine Kinematik montiert und im Raum bewegt und/oder der Drucktisch wird unter dem Extruder bewegt. Somit entsteht eine relative Geschwindigkeit von der Austragsdüse des Extruders gegenüber der zu druckenden Struktur. Um die Struktur möglichst konturgetreu drucken zu können, muss zu jeder Zeit die zuvor bestimmte Menge an Material mit der gewünschten Geometrie extrudiert werden. Dies ist insbesondere bei Einschneckenextrudern sehr herausfordernd.

Die Kontrolle des Volumenaustrags erfolgt dabei vornehmlich über die Regelung der Schneckendrehzahl, da der reale Volumenaustrag nicht direkt physikalisch erfassbar und steuerbar ist. Im globalen Mittel kann hierdurch zwar ein verhältnismäßig konstanter Materialaustrag erreicht werden. Auf einer kürzeren Zeitskala betrachtet sind jedoch teils erhebliche Pulsationen sichtbar.

Da beim 3D-Druck über einen langen Zeitraum extrudierte Stränge aufeinandergeschichtet werden, um ein Bauteil zu erzeugen, ist es äußerst wünschenswert, wenn das Austragsverhalten und damit der Volumenstrang konstant gehalten werden kann. Wenn das Austragsverhalten nicht genau kontrolliert werden kann, weisen diese Stränge Geometrieabweichungen auf, so dass das gefertigte Bauteil Fehlstellen wie Porositäten enthält oder von der gewünschten Geometriekontur abweicht.

Es ist daher Aufgabe der vorliegenden Erfindung ein Verfahren zum Erstellen einer lokalen und dynamischen Austragscharakteristik anzugeben, die dann bei der Ansteuerung der Extrusionsschnecke verwendet werden können, um einen im wesentlichen konstanten Materialaustrag sicherstellen zu können.

Die Aufgabe wird mit dem Verfahren gemäß Anspruch 1, dem Verfahren gemäß Anspruch 2 sowie dem Verfahren gemäß Anspruch 3 erfindungsgemäß gelöst. Vorteilhafte Ausgestaltungen der Erfindung finden sich dann in den entsprechenden Unteransprüchen.

Gemäß Anspruch 1 wird ein Verfahren zum Erstellen einer lokalen Austragscharakteristik einer Extrusionseinrichtung vorgeschlagen, wobei die Extrusionseinrichtung mittels einer durch einen Motor angetriebenen Extrusionsschnecke ein druckfähiges Material an einer Austragsdüse ausgibt, um eine dreidimensionale Struktur aus dem druckfähigen Material zu bilden.

Eine solche Extrusionseinrichtung wird zum Herstellen von 3-dimensionalen Strukturen aus mindestens einem druckfähigen Material verwendet, beispielsweise einem thermoplastischen Material, wobei die Extrusionseinrichtung gattungsgemäß eine Extrusionsschnecke zum Ausbringen des druckfähigen Materials aufweist. Hierzu wird der Extrusionseinrichtung über eine Materialzuführung das druckfähige Material zugeführt. Dies kann beispielsweise in Form eines Granulates erfolgen, das der Extrusionsschnecke zugeführt, dort mithilfe einer Temperiereinrichtung temperiert und durch die entstehende Scherwärme in eine Schmelze überführt wird. Denkbar ist aber auch, dass der Extrusionseinrichtung bereits ein aufgeschmolzenes, druckfähiges Material zugeführt wird, was dann der Extrusionsschnecke bereitgestellt wird.

Die Extrusionsschnecke wird durch einen Motor drehbar angetrieben. Die Steuerung des Motors erfolgt mithilfe einer Steuereinheit, die den Motor zur Steuerung der Drehung, insbesondere der Drehgeschwindigkeit ansteuert. Die Drehgeschwindigkeit der Extrusionsschnecke hat dabei direkten Einfluss auf das Austragsvolumen und stellt somit eine relevante Steuerungsgröße dar.

Die Extrusionsschnecke fördert nun das aufgeschmolzene, druckfähige Material in Richtung einer Austragsdüse, um das aufgeschmolzene, druckfähige Material zur Bildung der dreidimensionalen Struktur auszubringen.

Eine solche Extrusionseinrichtung kann dabei innerhalb eines 3D-Druckkopfes angeordnet sein, der beispielsweise als Endeffektor an einer Bewegungskinematik angeordnet ist. Die Bewegungskinematik bewegt dabei den Druckkopf relativ gegenüber einem Bauraum, innerhalb dessen die 3-dimensionale Struktur durch den Druckkopf erstellt werden soll. Denkbar ist aber auch, dass die Extrusionseinrichtung feststehend ist und die Bewegungskinematik den Bauraum gegenüber der Extrusionseinrichtung relativ bewegt, sodass eine Relativbewegung realisiert wird, um die 3-dimensionale Struktur durch den Materialaustrag zu erstellen.

Erfindungsgemäß ist nun vorgesehen, dass eine lokale Austragscharakteristik erstellt wird, wobei diese ein Austragsvolumen des druckfähigen Materials aus der Austragsdüse in Abhängigkeit von einem Drehwinkel der Extrusionsschnecke und/oder einem Vielfachen davon definiert. Das Verfahren umfasst dabei die folgenden Schritte:
- Ausgeben des druckfähigen Materials durch Ansteuerung des Motors derart, dass die Extrusionsschnecke eine im Wesentlichen konstante Drehgeschwindigkeit aufweist;
- kontinuierliches Erfassen einer Drehwinkelinformation der Extrusionsschnecke und Hinterlegen der Drehwinkelinformation in einem digitalen Datenspeicher;
- kontinuierliches Erfassen des strangförmig ausgegebenen Materials mittels einer Sensorik umfassend mindestens einen Sensor und Ermitteln des Austragsvolumens des strangförmig ausgegebenen Materials für einen gewissen Strangabschnitt;
- kontinuierliches Zuordnen des ermittelten Austragsvolumen zu einer hinterlegten Drehwinkelinformation der Extrusionsschnecke, und
- Erstellen einer lokalen Austragscharakteristik basierend auf einer Vielzahl von hinterlegten Drehwinkelinformationen und ihren jeweils zugeordneten Austragsvolumen.

Um die lokale Austragscharakteristik zu erstellen, wird mithilfe der Extrusionseinrichtung, für die die lokale Austragscharakteristik erstellt werden soll, ein druckfähiges Material ausgegeben. Dieses druckfähige Material ist dabei in der Regel strangförmig. Während der Ausgabe des Materials wird kontinuierlich eine Drehwinkelinformation (beispielsweise in Form eines Drehwinkels von 0° bis 360°) der Extrusionsschnecke mithilfe eines Drehgebers erfasst und in einem digitalen Datenspeicher hinterlegt. Es kann vorgesehen sein, dass für jede Drehwinkelinformation eine hochgenaue Zeitinformation hinterlegt wird, damit zu einem späteren Zeitpunkt festgestellt werden kann, wann die jeweilige Drehwinkelinformation gemessen wurde.

Weiterhin wird kontinuierlich das strangförmig ausgegebene Material mithilfe einer Sensorik erfasst. Dabei kann kontinuierlich für einen gewissen Strangabschnitt das Austragsvolumen des strangförmig ausgegebenen Materials ermittelt werden. So ist es denkbar, dass beispielsweise die Form und Geometrie, insbesondere der Querschnitt, des strangförmig ausgegebenen Materials durch die Sensorik erfasst und daraus dann das Austragsvolumen für diesen Strangabschnitt ermittelt wird. Basierend auf einer hochgenauen Zeitinformation, zu der das Austragsvolumen für den jeweiligen Strangabschnitt ermittelt wurde, kann dieser Strangabschnitt einer Drehwinkelinformation zugeordnet werden, die zuvor hinterlegt wurde. Hierdurch wird eine Zuordnung der erfassten Drehwinkelinformation der Extrusionsschnecke zu den jeweiligen Austragsvolumen möglich, sodass für jede Drehwinkelinformation solches Austragsvolumen ermittelbar wird. Zusätzlich kann in einer besonderen Ausführungsform über eine geeignete Sensorik der Schmelzedruck bzw. eine Materialdruckinformation erfasst und der jeweiligen Drehwinkelinformation und/oder einem Austragsvolumen zugeordnet werden.

Dabei wird kontinuierlich für immer neue Strangabschnitte das Austragsvolumen durch Erfassen des strangförmig ausgegebenen Materials ermittelt und der jeweiligen zuvor hinterlegten Drehwinkelinformation der Extrusionsschnecke zugeordnet. Dieser Prozess wird für eine gewisse Zeit, beispielsweise mehr als 5 Minuten, durchgeführt, sodass für eine Vielzahl von Strangabschnitten des strangförmig ausgegebenen Materials das Austragsvolumen vorliegt und die damit im Zusammenhang stehende Drehwinkelinformation.

Aus diesen Datensatz aus Austragsvolumen und Drehwinkelinformation wird nun die lokale Austragscharakteristik erstellt. Dabei können noch weitere Informationen bzw. Prozesskenngrößen erfasst und mit in die lokale Austragscharakteristik einfließen. So ist es denkbar, dass für verschiedene Drehgeschwindigkeiten der Extrusionsschnecke ein entsprechender Datensatz erstellt wird, sodass das Austragsvolumen für einen gewissen Drehwinkel auch in Abhängigkeit der verwendeten Drehgeschwindigkeit der Extrusionsschnecke in der lokalen Austragscharakteristik hinterlegt und abrufbar ist.

Dadurch wird es möglich, der Steuereinheit zur Ansteuerung des Motors der Extrusionsschnecke eine solche lokale Austragscharakteristik bereitzustellen, sodass die Steuereinheit ferner eingerichtet ist, den gewünschten Materialaustrag aus der Austragsdüse durch Ansteuerung des Motors zur Steuerung der Drehgeschwindigkeit der Extrusionsschnecke in Abhängigkeit von dem aus der lokalen Austragscharakteristik für die erfasste Drehwinkelinformation definierten Austragsvolumen einzustellen. Mit anderen Worten, die Steuereinheit ist eingerichtet, die Drehgeschwindigkeit der Extrusionsschnecke basierend auf der lokalen Austragscharakteristik innerhalb einer Umdrehung zu variieren, um einen konstanten Materialaustrag zu gewährleisten. Die lokale Austragscharakteristik wird somit bei einer schneckenbasierten Extrusionseinrichtung zur Variation der Drehgeschwindigkeit der Extrusionsschnecke innerhalb einer Umdrehung verwendet, um den Materialaustrag innerhalb von Toleranzen im Wesentlichen konstant zu halten.

Dadurch kann erreicht werden, dass in einem additiven bzw. generativen Fertigungsverfahren Bauteile gedruckt werden können, die hinsichtlich ihrer Geometrie eine besonders hohe Güte aufweisen, wodurch Fehlstellen, Fehlbauteile und Ausschuss verringert werden können.

Die lokale Austragscharakteristik dient dabei insbesondere zur Kompensation von Schwankungen des Materialaustrags bei einer weitestgehend konstanten Drehgeschwindigkeit der Extrusionsschnecke.

Dabei kann das Austragsvolumen auch zeitabhängig definiert sein, d. h. Volumen pro Zeit, wobei dann in der lokalen Austragscharakteristik weiterhin eine Drehgeschwindigkeit der Extrusionsschnecke definiert ist, sodass dann die lokale Austragscharakteristik das Austragsvolumen für verschiedene Drehgeschwindigkeiten und Drehwinkel der Extrusionsschnecke definiert.

Unter einer lokalen Austragscharakteristik wird insbesondere verstanden, dass die Abhängigkeit von Austragsvolumen zu Drehwinkel und gegebenenfalls Drehgeschwindigkeit für nur eine sehr kurze Zeit berücksichtigt wird, d. h. vorzugsweise für weniger als 20 Umdrehungen der Extrusionsschnecke, vorzugsweise weniger als 10 Umdrehungen.

Gemäß Anspruch 2 wird ein Verfahren zum Erstellen einer dynamischen Austragscharakteristik einer Extrusionseinrichtung vorgeschlagen, wobei die Extrusionseinrichtung mittels einer durch einen Motor angetriebenen Extrusionsschnecke ein druckfähiges Material an einer Austragsdüse ausgibt, um eine dreidimensionale Struktur aus dem druckfähigen Material zu bilden, und wobei die dynamische Austragscharakteristik ein Austragsvolumen des druckfähigen Materials aus der Austragsdüse in Abhängigkeit von einer Drehgeschwindigkeitsänderung der Extrusionsschnecke definiert. Erfindungsgemäß umfasst das Verfahren zum Erstellen der dynamischen Austragscharakteristik die folgenden Schritte:
- Ausgeben des druckfähigen Materials durch Ansteuerung des Motors derart, dass die Extrusionsschnecke eine Drehgeschwindigkeitsänderung von einer ersten Drehgeschwindigkeit hin zu einer zweiten Drehgeschwindigkeit aufweist;
- kontinuierliches Erfassen einer Drehwinkelinformation der Extrusionsschnecke während der Drehgeschwindigkeitsänderung und Hinterlegen der Drehwinkelinformation in einem digitalen Datenspeicher;
- kontinuierliches Erfassen des strangförmig ausgegebenen Materials mittels einer Sensorik umfassend mindestens einen Sensor und Ermitteln des Austragsvolumens des strangförmig ausgegebenen Materials für einen gewissen Strangabschnitt;
- kontinuierliches Zuordnen des ermittelten Austragsvolumen zu einer hinterlegten Drehwinkelinformation der Extrusionsschnecke, und
- Erstellen einer dynamischen Austragscharakteristik basierend auf einer Vielzahl von hinterlegten Drehwinkelinformationen und ihren jeweils zugeordneten Austragsvolumen.

Bei diesem Aspekt der Erfindung wird eine dynamische Austragscharakteristik berücksichtigt, wenn durch eine Drehgeschwindigkeitsänderung der Extrusionsschnecke der Materialaustrag verlangsamt werden soll, beispielsweise wenn die Relativbewegung zwischen der Extrusionseinrichtung und dem Bauraum verlangsamt wird. Dies ist oftmals dann der Fall, wenn der geradlinige Materialaustrag in einen gebogenen Materialaustrag (beispielsweise an einer Ecke im 90° oder 180° Winkel) kurzzeitig geändert wird. Durch die Verlangsamung der zurückgelegten Wegstrecke bei der Relativbewegung muss auch der Materialaustrag reduziert werden, da ansonsten bei gleichbleibendem Materialaustrag, aber einer veränderten relativen Bewegungsgeschwindigkeit zu viel Material pro Zeit ausgegeben werden würde. Durch die Reduzierung der Drehgeschwindigkeit der Extrusionsschnecke wird dem Rechnung getragen, weil der Materialaustrag pro Zeit reduziert wird. Um im Ergebnis dennoch eine konstanten Materialaustrag zu gewährleisten, wird bei der dynamischen Austragscharakteristik eine Drehgeschwindigkeitsänderung der Extrusionsschnecke für das jeweilige Austragsvolumen und gegebenenfalls die Drehgeschwindigkeit definiert, sodass auch dynamische Veränderungen in der relativen Bewegungsgeschwindigkeit im Sinne der vorliegenden Erfindung berücksichtigt werden können.

Wie bei der Erstellung der lokalen Austragscharakteristik wird auch hier den jeweiligen Strangabschnitten, die durch die Sensorik erfasst und für die das jeweilige Austragsvolumen bestimmt wurde, einen gemessene Drehwinkelinformation der Extrusionsschnecke zugeordnet. Allerdings wird beim Erstellen der dynamischen Austragscharakteristik die Drehgeschwindigkeit der Extrusionsschnecke verändert, und zwar von einer ersten Drehgeschwindigkeit hin zu einer zweiten Drehgeschwindigkeit. Dabei wird in der Regel auch die Relativgeschwindigkeit zwischen Austragsdüse und Substrat verändert, um einem wesentlich gleich bleibenden Materialaustrag und dergleichen eines Austragsvolumen erzielen. Dabei kann auch hier basierend auf einem Drucksensor eine Materialdruckinformation erfasst und hinterlegt werden.

Gemäß Anspruch 3 wird ein Verfahren zum Erstellen einer globalen Austragscharakteristik einer Extrusionseinrichtung vorgeschlagen, wobei die Extrusionseinrichtung mittels einer durch einen Motor angetriebenen Extrusionsschnecke ein druckfähiges Material an einer Austragsdüse ausgibt, um eine dreidimensionale Struktur aus dem druckfähigen Material zu bilden, und wobei die globale Austragscharakteristik ein Austragsvolumen des druckfähigen Materials aus der Austragsdüse unabhängig von dem Drehwinkel der Extrusionsschnecke gemittelt über einen gewissen Austragszeitraum in Abhängigkeit von einem Drehwinkel der Extrusionsschnecke und/oder einem Vielfachen davon definiert. Das Verfahren umfasst die folgenden Schritte:
- Ausgeben des druckfähigen Materials durch Ansteuerung des Motors derart, dass die Extrusionsschnecke eine im Wesentlichen konstante Drehgeschwindigkeit aufweist;
- kontinuierliches Erfassen des strangförmig ausgegebenen Materials mittels einer Sensorik umfassend mindestens einen Sensor und Ermitteln des Austragsvolumens des strangförmig ausgegebenen Materials für einen gewissen Strangabschnitt und Hinterlegen der kontinuierlich erfassten Austragsvolumen; und
- Erstellen einer globalen Austragscharakteristik basierend auf der Vielzahl von hinterlegten Austragsvolumen.

Dabei kann vorgesehen sein, dass die jeweilige Drehgeschwindigkeit der Extrusionsschnecke dem gemittelten Austragsvolumen, welches sich aus der Vielzahl von kontinuierlich erfassten Austragsvolumen ergibt, zugeordnet wird, wobei das Verfahren für verschiedene, im Wesentlichen konstante Drehgeschwindigkeiten der Extrusionsschnecke ausgeführt wird. Auch hier kann vorgesehen sein, dass zusätzlich eine Materialdruckinformation durch einen Drucksensor erfasst und in der Austragscharakteristik hinterlegt wird.

Die globale Austragscharakteristik mittelt dabei ein kontinuierlich erfasstes Austragsvolumen verschiedener Strangabschnitte des druckfähigen Materials bei einer gewissen Mindestanzahl von vollen Schneckenumdrehungen. Dies könne beispielsweise mehr als 20, vorzugsweise mehr als 100 Umdrehungen sein. Das gemietete Austragsvolumen wird dann der im wesentlichen konstanten Drehgeschwindigkeit der Extrusionsschnecke zugeordnet.

Sowohl für das Erstellen der lokalen als auch der dynamischen Austragscharakteristik als auch der globalen Austragscharakteristik können neben der Drehwinkelinformation als eine relevante Prozesskenngröße auch die Drehgeschwindigkeit der Extrusionsschnecke, ein Schneckendrehmoment, Schmelzdruck, sowie die Strangbreite und Stranghöhe berücksichtigt werden. Außerdem können Prozessrandbedingungen mit einfließen, wie beispielsweise Schichtabstand, Druckgeschwindigkeit (Substratfördergeschwindigkeit), Temperaturen (Extruder, Substrat, Temperaturführung des Bauraums um Abkühlverhalten zu beeinflussen), verarbeitetes Kunststoffmaterial, Substratmaterial, Substratgeometrie (eben, gekrümmt, nebeneinanderliegender Strang, mittig liegender Strang). Alle Prozesskenngrößen und/oder Prozessrandbedingungen werden zeitsynchron aufgezeichnet und anschließend miteinander korreliert.

Gemäß einer Ausführungsform ist vorgesehen, dass eine lokale Austragscharakteristik und eine dynamische Austragscharakteristik und eine globale Austragscharakteristik erstellt wird, wobei die lokale Austragscharakteristik und die dynamische Austragscharakteristik und die globale Austragscharakteristik zu einer gemeinsamen Austragscharakteristik zusammengeführt werden. Dabei ist es denkbar, dass die gemeinsame Austragscharakteristik aus nur zwei der drei vorstehend beschriebenen Austragscharakteristiken erstellt wird.

Gemäß einer Ausführungsform ist vorgesehen, dass die jeweilige Austragscharakteristik derart erstellt wird, dass das entsprechende Austragsvolumen mittels einer polynominalen und/oder tabellarischen Beschreibung definiert wird.

Gemäß einer Ausführungsform ist vorgesehen, dass mittels eines Drucksensor angeordnet nach der Extrusionsschnecke eine Materialdruckinformation erfasst wird, wobei die Materialdruckinformationen zusätzlich in der jeweiligen Austragscharakteristik hinterlegt werden.

Gemäß einer Ausführungsform ist vorgesehen, dass das strangförmig ausgegebene Material mittels mindestens eines optischen Sensors, insbesondere mittels mindestens einer Kamera, mittels mindestens eines taktilen Sensors, und/oder mittels mindestens eines Laserlichtschnittsensors, erfasst wird.

Gemäß einer Ausführungsform ist vorgesehen, dass das druckfähige Material auf ein Substrat abgelegt wird, wobei zwischen dem Substrat und der Austragsdüse eine Relativbewegung ausgeführt wird, oder dass das druckfähige Material in die Luft extrudiert wird.

Dabei sind zwei alternative Druckprozesse zum Ermitteln der jeweiligen Austragscharakteristik denkbar. Bei der ersten Alternative wird das druckfähige Material auf ein Substrat gedruckt, wobei eine Relativbewegung zwischen Austragsdüse und Substrat erzeugt wird. Diese Relativbewegung kann beispielsweise durch ein sich bewegende Substrat erzeugt werden. Das Material wird dabei auf das Substrat abgelegt und später wieder abgezogen, damit kontinuierlich neues Material auf das Substrat abgelegt werden kann. In einer Ausführungsform dabei vorgesehen, dass das druckfähige Material auf ein als Förderband oder als theoretisch ausgebildetes Substrat abgelegt wird, bei das Förderband oder der Drehtisch gegenüber der Extrusionseinrichtung, die feststeht, bewegt wird.

Denkbar ist aber in einer zweiten Alternative auch, dass das druckfähige Material in die Luft gedruckt wird, d. h. die Austragsdüse legt das Material nicht auf einem Substrat ab. In dieser Ausführungsform kann auf eine Relativbewegung zwischen der Austragsdüse und einem sich bewegenden Substrat verzichtet werden.

Es kann vorgesehen sein, dass relevanten Prozessrandbedingungen, wie beispielsweise Bauraumtemperatur oder Druckgeschwindigkeit oder das Drucken zwischen zwei Strängen, nachgestellt werden, um so das Austragsverhalten sowie die Stranggeometrie und/oder Austragsvolumen zur Verbesserung der Bauteilfertigung zu erfassen.

Ein Aspekt der vorliegenden Erfindung ist auch eine Vorrichtung zur Durchführung des vorstehend beschriebenen Verfahrens, wobei die Vorrichtung eine Extrusionseinrichtung zum Ausgeben des druckfähigen Materials sowie eine Sensorik hat, um das ausgegebene strangförmige Material zu erfassen und das Austragsvolumen für einen gewissen Strangabschnitt festzustellen. Die von der Extrusionseinrichtung gelieferte Drehwinkelinformation wird dann zusammen mit dem festgestellten Austragsvolumen eine Auswerteeinheit zugeführt, die dann eine entsprechende lokale oder dynamische Austragscharakteristik erstellt.

Ein weiterer Aspekt der vorliegenden Erfindung ist ein Verfahren zur Herstellung einer dreidimensionalen Struktur aus mindestens einem druckfähigen Material mittels einer Extrusionseinrichtung, wobei das Verfahren die folgenden Schritte umfasst:
- Ansteuern eines Motors zur Steuerung der Drehung einer Extrusionsschnecke der Extrusionseinrichtung, um das druckfähige Material von einer Materialzuführung hin zu einer Austragsdüse zum Ausgeben des druckfähigen Materials zu fördern;
**gekennzeichnet durch**
- Erstellen einer Austragscharakteristik gemäß dem Verfahren nach einem der Ansprüche 1 bis 9; und
- Herstellen der dreidimensionalen Struktur mittels der Extrusionseinrichtung unter Verwendung der erstellten Austragscharakteristik.

Die erstellte lokale Austragscharakteristik, dynamische Austragscharakteristik und/oder globale Austragscharakteristik wird dabei zur Einstellung des gewünschten Materialaustrags aus der Austragsdüse Ansteuerung des Motors zur Steuerung der Drehung der Extrusionsschnecke verwendet.

Dabei ist es denkbar, dass eine Abweichung zwischen einer erfassten Charakteristik und einer Druckinformation, die ebenfalls in der Austragscharakteristik hinterlegt ist, festgestellt wird, wobei dann bei Bedarf die Extrusionseinrichtung neu kalibriert werden kann. Dabei wird die in der Austragscharakteristik hinterlegt Druckinformation der Schmelze für den jeweiligen Prozessschritt mit der erfassten Druckinformation verglichen.

Ein weiterer Aspekt der vorliegenden Erfindung ist eine Anlage zum Herstellen von dreidimensionalen Strukturen aus mindestens einem druckfähigen Material, wobei die Anlage aufweist:
- eine Extrusionseinrichtung mit einer Extrusionsschnecke zum Fördern des mindestens einen druckfähigen Materials von einer Materialzuführung hin zu einer Austragsdüse zum Ausgeben des mindestens einen druckfähigen Materials, einem Motor zum drehbaren Antreiben der Extrusionsschnecke sowie einer Steuereinheit, die zum Steuern der Drehgeschwindigkeit der Extrusionsschnecke durch Ansteuerung des Motors eingerichtet ist, und
- einer Vorrichtung zur Durchführung des vorstehend beschriebenen Verfahrens,
- wobei die Anlage eingerichtet ist, vor der Herstellung einer dreidimensionalen Struktur eine lokale Austragscharakteristik und/oder eine dynamische Austragscharakteristik und/oder eine globale Austragscharakteristik mittels der Vorrichtung zu erstellen und die jeweilige erstellte Austragscharakteristik zur Steuerung des Materialaustrags zu verwenden.

Dieser Ausführungsform ist das Verfahren direkt in den 3D-Druckprozess eingebunden, dass mindestens einmalig für ein relevantes Prozessfenster (Material, Temperatur, Extrusionsschnecke Inhalt, Düse, ...), vorteilhafterweise vor jedem Druckprozess nach dem Hochfahren der Anlage sowie vorteilhafterweise auch zu geeigneten Zeitpunkten während des Druckprozesses vollständig oder zumindest teilweise eine Kalibrierung des Austragsverhalten für die Ansteuerung der Extrusionseinrichtung erstellt wird. Dadurch kann vor dem eigentlichen Druckprozess für die vorherrschenden Prozessgrößen und Randbedingungen eine entsprechende lokale und/oder dynamische Austragscharakteristik erstellt werden, die dann in dem anschließenden Druckprozess für die Steuerung genutzt wird.

Die Erfindung wird anhand der beigefügten Figuren beispielhaft erläutert. Es zeigen:
- Figur 1: Aufbau einer Extrusionseinrichtung;
- Figur 2: Amplituden bei n-fachen der Drehfrequenz bzw. 1/n-fachen Drehfrequenz;
- Figur 3: Verläufe von Druck, Moment, Austragsfläche über dem Schneckendrehwinkel;
- Figur 4: schematischer Aufbau einer Anlage zur Charakterisierung des Austragsverhaltens;
- Figur 5: schematische Darstellung unterschiedlicher Ausführungsformen des Substrates;
- Figur 6: schematischer Aufbau einer Anlage mit Rundtisch;
- Figur 7: schematische Darstellung unterschiedlicher Sensortypen.

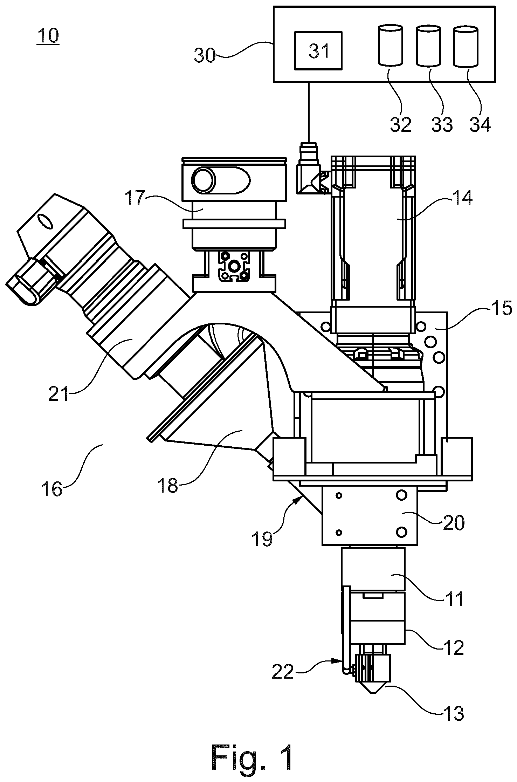

Figur 1 zeigt den Aufbau der erfindungsgemäßen Extrusionseinrichtung 10. Die Extrusionseinrichtung 10 hat eine in einem Extruderzylinder 11 Integrierte Extrusionsschnecke 12, an die sich in Materialflussrichtung einer Austragsdüse 13 anschließt. Die in dem Extruderzylinder 11 eingebauter Extrusionsschnecke 12 steht dabei mit einem Motor 14 in Wirkverbindung, der die Extrusionsschnecke 12 drehbar antreibt. Das alles ist an einer Anbindungsgeometrie 15 angeordnet.

In dem Extruderzylinder 11 befindet sich dabei nur eine Extrusionsschnecke 12, sodass das in der Figur 1 gezeigte Aggregat auch als Einschneckenextruder bezeichnet werden kann.

Auf der linken Seite der Extrusionseinrichtung 10 befindet sich eine Materialzuführung 16, mit der ein granulatartiges Material der Extrusionsschnecke 12 zugeführt wird. Hierfür weist die Materialzuführung 16 einen Vorratsbehälter 17 auf, der in einen Zuführtrichter 18 mündet. Der Zuführtrichter 18 leitet das Granulat zu einer Zuführschnecke 19, mit der das Granulat in eine Einzugszone 20 befördert wird. In dieser Einzugszone 20 wird das granulatartige Materialder Extrusionsschnecke 12 zugeführt, dort erwärmt und somit aufgeschmolzen, sodass die dann vorliegende Schmelze in der Extrusionsschnecke 12 weiter gefördert werden kann. Der Antrieb der Zuführschnecke 19 erfolgt über eine Zuführschneckenmotor 21, der mit der Zuführschnecke 19 in Wirkverbindung steht.

Es ist des Weiteren eine Steuereinheit 30 vorgesehen, die zur Ansteuerung des Motors 14 entsprechend mit diesen in Verbindung steht. Die Verbindung kann dabei kabelgebunden oder kabellos erfolgen. Die Steuereinheit 30 ist dabei so ausgebildet, dass sie den Motor 14 derart ansteuert, dass dieser eine Drehgeschwindigkeit der Extrusionsschnecke 12 erzeugt, die den gewünschten Materialaustrag an der Austragsdüse 13 realisiert.

Hierzu weist die Steuereinheit 30 eine Recheneinheit 31 auf, mit der die Ansteuerung des Motors 14 berechnet und ermittelt wird. Die Steuereinheit 30 weist darüber hinaus eine lokale Austragscharakteristik 32, eine globale Austragscharakteristik 33 sowie eine dynamische Austragscharakteristik 34 auf.

Die lokale Austragscharakteristik 32 definiert ein Austragsvolumen des druckfähigen Materials in Abhängigkeit von einem Drehwinkel der Extrusionsschnecke 12 und/oder einem Vielfachen davon und in Abhängigkeit von der Umdrehungsgeschwindigkeit der Extrusionsschnecke 12.

Die globale Austragscharakteristik 33 definiert ein Austragsvolumen des druckfähigen Materials unabhängig von einem Drehwinkel und nur in Abhängigkeit von der Umdrehungsgeschwindigkeit der Extrusionsschnecke 12

Die dynamische Austragscharakteristik 34 definiert ein Austragsvolumen des druckfähigen Materials in Abhängigkeit von einer Drehwinkeländerung der Extrusionsschnecke 12 und somit in Abhängigkeit von der Änderung der Umdrehungsgeschwindigkeit.

Die drei Austragscharakteristiken 32 - 34 werden dabei überlagert und es wird zur Ansteuerung des Motors 14 gegebenenfalls eine Änderung der Umdrehungsgeschwindigkeit errechnet, um so Schwankungen im Materialaustrag zu kompensieren.

Die Extrusionseinrichtung weist darüber hinaus einen Drucksensor 22 auf, der mit der Steuereinheit 30 kommunikativ in Verbindung steht. Der Drucksensor 22 erfasst dabei eine Druckinformation an der Austragsdüse 13 und leitet diese Druckinformation an die Steuereinheit 30 weiter. Zusätzlich zu der vor Steuerung basierend auf den Austragscharakteristiken wird die Drehgeschwindigkeit der Extrusionsschnecke 12 dabei auch in Abhängigkeit der erfassten Druckinformation eingestellt. Die Regelung kann dabei mittels eines P-Reglers, eines PI-Reglers oder eines anderen geeigneten Reglers erfolgen.

Soll das Extrusionsaggregat für den 3D-Druck eines Bauteils genutzt werden, wird häufig ein G-Code erstellt. Dieser G-Code enthält die Informationen zu welchem Zeitpunkt der Extruder eine definierte Wegstrecke mit einer definierten Geschwindigkeit im Raum zurücklegen soll. Ebenfalls wird bei der Pfadplanung häufig für diese Wegstrecke definiert, welche Strangbreite und Stranghöhe an welcher Stelle extrudiert werden soll, um die finale Bauteilgeometrie zu erhalten. Somit ist auch die Information enthalten, wie viel Volumen an Material vom Extruder auf dieser definierten Wegstrecke ausgetragen werden muss. Diese Information muss von der Steuerung geeignet verarbeitet werden, um die Extrusionsschnecke derart anzusteuern, dass diese definierte Materialmenge ausgestoßen wird. Hierzu bedarf es des Wissens über das Austragsverhalten des Extruders, welches über die Austragscharakteristik definiert wird.

Basierend auf dem G-Code ist es ebenfalls möglich, relevante Prozessfenster zu identifizieren. Beispielhaft seien hier Parameterbereiche der voraussichtlichen Druckgeschwindigkeiten mit zugehörigen Strangbreiten und -höhen genannt. Hieraus kann eine geeignete endliche Anzahl an Stützpunkten definiert werden, die mittels der Austragscharakterisierung erfasst werden müssen, um das Extrusionsaggregat ansteuern zu können. Beispielsweise ist ein Stützpunkt beschrieben durch eine definierte konstante Schneckendrehzahl, eine definierte Druckgeschwindigkeit, welche mit der Bandabzugsgeschwindigkeit korreliert sowie eine definierte Schichthöhe, also dem Abstand zwischen Druckdüse und Bandoberfläche. Wird nun für ein signifikantes Zeitintervall, beispielsweise 10 volle Schneckenumdrehungen à 360°, für diesen Stützpunkt das Austragsverhalten charakterisiert, liegen zeitsynchrone Informationen über die Zusammenhänge von Schneckendrehzahl, Schneckendrehwinkel, Schneckendrehmoment, Schmelzedruck, Strangbreite, Stranghöhe und Strangquerschnitt in Abhängigkeit der relevanten Prozessparameter (Schichtabstand, Befüllungsart des Extruders, Material, ...) vor. Über eine ausreichende Anzahl von Stützpunkten kann das charakteristische globale Austragsverhalten des Extruders in Abhängigkeit der definierten Prozessparameter erfasst und anschließend beispielsweise mathematisch interpoliert werden. Somit steht nachfolgend eine Kompensationstabelle und/oder ein mathematisches Modell, bspw. eine polynominale Beschreibung des Volumenausstoßes in Abhängigkeit der Schneckendrehzahl, für die Ansteuerung des Extruders mittels der CNC-Steuerung zur Verfügung.

Diese Art der Charakterisierung bei konstanten Schneckendrehzahl basiert dabei auf der Annahme eines eingefahrenen Prozessfensters, also z.B. nach dem Anfahren des Extruders und Veränderung der Schneckendrehzahl bei einem ausreichend langen Verweilens in dem Prozessfenster. Während eines Druckprozesses kommt es jedoch häufiger vor, dass nicht mit einer konstanten Druckgeschwindigkeit gedruckt wird, sondern diese sich zeitlich ändert. Beispielsweise wenn eine Roboterkinematik eine scharfe 180° Kurve abfahren soll und es zu Geschwindigkeitseinbrüchen kommt, da die Kinematikachsen ihre Belastungsgrenze erreichen. Da die globale Austragscharakterisierung einen "eingeschwungenen" Prozesszustand voraussetzt, kann diese Charakterisierung nur näherungsweise und bei kleinen Geschwindigkeitsänderungen hinreichend genau das Austragsverhalten beschreiben und für die Ansteuerung genutzt werden. Daher sollten zusätzlich relevante Prozessfenster der Geschwindigkeitsänderung der Schneckendrehzahl und/oder Abzugsgeschwindigkeit charakterisiert und mathematisch oder als Kompensationstabelle modelliert werden.

Bei einer Absenkung der Schneckendrehzahl wird sich der Volumenaustrag beispielsweise veränderlich über die Zeit verringern und damit auch die Strangbreite, bis erneut ein eingeschwungener Zustand erreicht wird. Bei einer Erhöhung der Schneckendrehzahl findet eine entsprechende Zunahme des Volumenstroms statt. Diese Volumenstromänderung ist dabei von dem Prozessfenster abhängig, also insbesondere der Start- und Enddrehzahl, der Geschwindigkeitsänderung (Schneckenbeschleunigung), dem Schmelzedruck sowie durch den u.a. von der Substratgeometrie (Schichthöhe, Extrudieren zwischen zwei Stränge oder auf Ebene oder auf gekrümmte Ebene) beeinflussten Gegendruck, und weiteren Prozesskenngrößen wie Temperatur oder Material. Analog zur Beschreibung des globalen Austragsverhaltens gilt es auch hier anhand der zu erwartenden Prozessfenster eine geeignete Anzahl an Stützstellen zu vermessen. In der CNC-Steuerung können diese wiederum als mathematisches Modell interpoliert oder Kompensationstabelle verarbeitet werden, so dass bei einer bekannten zu erwartenden Änderung der Druckgeschwindigkeit die Geschwindigkeitsänderung und/oder Schneckendrehzahl geeignet nachgeführt werden, um die geforderte Stranggeometrie zu erreichen.

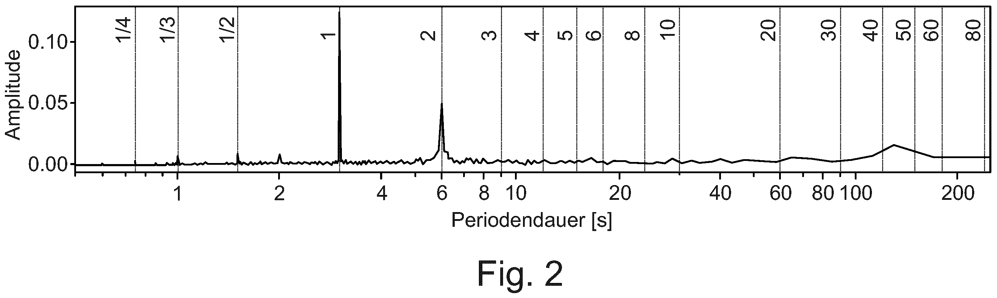

Wird ein verhältnismäßig kurzes Zeitintervall, beispielsweise eine einzelne Schneckenumdrehung von 0-360°, betrachtet, zeigen sich lokale Veränderungen im Austragsverhalten des Extrusionsaggregates. In dieser Charakteristik finden sich auch periodisch wiederkehrende Änderungen im Austragsverhalten, wobei die absoluten Amplituden teilweise variieren können. Dem überlagert finden zudem eher dem globalen Austragsverhalten zuzuordnende Änderungen im Austragsverhalten statt. Insbesondere für die periodisch wiederkehrenden Änderungen bietet es sich an, eine Vorsteuerung des Extrusionsaggregates einzurichten, so dass diese kompensiert werden können. Hierfür können dieselben Messdaten wie für die globale Austragscharakterisierung sowie die Charakterisierung bei Schneckendrehzahländerungen verwendet werden. Insbesondere in Abhängigkeit des Schneckendrehwinkels wird in einer vorteilhaften Ausführung somit bewusst die Extruderschnecke schneller oder langsamer gedreht und dies der globalen Ansteuerung überlagert, um periodisch bekannte Einbrüche oder Zunahmen im Austragsverhalten zu kompensieren. Die notwendige Größe der Kompensation ist dabei von dem Prozessfenster abhängig, also insbesondere der Geschwindigkeitsänderung (Schneckenbeschleunigung), dem Schmelzedruck sowie durch den u.a. von der Substratgeometrie (Schichthöhe, Extrudieren zwischen zwei Stränge oder auf Ebene oder auf gekrümmte Ebene) beeinflussten Gegendruck, und weiteren Prozesskenngrößen wie Temperatur oder Material. Periodisch wiederkehrende Änderungen können hierbei auch bei n-Vielfachen der Basisfrequenz bezogen auf die Schneckendrehzahl auftreten, müssen also nicht zwangsläufig alle 0-360° vorhanden sein. Ebenfalls treten die Amplitudenvariationen der Pulsationen teilweise zyklisch bei höher- und/oder niederharmonischen n- bzw. 1/n-Vielfachen auf. Dies kann dadurch berücksichtigt werden, dass die Regelparameter während des Betriebs des Extrusionsaggregates basierend auf den Drucksensordaten adaptiert werden können. Figur 2 zeigt hierzu Amplituden bei n-fachen der Drehfrequenz bzw. 1/n-fachen Drehfrequenz.

Um diese Charakterisierungen nun im 3D-Druckprozess zur Kompensation zu nutzen, so dass ein gleichmäßigeres Austragsverhalten erreicht wird, werden diese in der CNC-Steuerung berücksichtigt. Je nach Prozessfenster und Extrusionsaggregat sind dabei nicht zwingend alle Mechanismen gleichzeitig erforderlich, um eine hinreichende Regelgüte zu erreichen. Mindestens einmal für jedes relevante Prozessfenster sollten das globale, lokale und dynamische Austragsverhalten charakterisiert werden. Vorteilhaft kann es zudem sein, vor jedem 3D-Druckprozess die Charakterisierung vollständig oder mindestens in Teilen zu wiederholen, um sicherzustellen, dass das Austragsverhalten hinreichend genau bekannt ist. Aus diesen Charakteristiken können nun mathematisch interpolierte Modelle und/oder Kompensationstabellen abgeleitet werden, die auf die Regelparameter der CNC-Steuerung wirken. Eine vorteilhafte Art der Ansteuerung der Extruderschnecke während eines Druckprozesses bildet entweder die Vorgabe von Schneckendrehgeschwindigkeiten und/oder Schneckenpositionen als SollWerte. Bei einer CNC-Steuerung bestehen für Motoren häufig drei prinzipielle Regelkreise. Der Lageregelkreis für die Positionen, welcher i.d.R. im Interpolationstakt (2.8. ein fester Wert von 2-8 ms) arbeitet, sowie der Drehzahl- und Stromregelkreis, welche i.d.R. im Servointerpolationstakt (2.8. ein fester Wert von 22,5 - 125 Mikrosekunden) arbeitet. Diese Regelkreise wirken aufeinander, beispielsweise kaskadiert, so dass ein Regelsystem entsteht. In dieses Regelsystem können zusätzliche Elemente wie n-dimensionale Filter oder weitere Regelkreise mit Proportional-, Integral- sowie Differentialanteilen eingefügt werden, um z.B. eine Vorsteuerung des Schneckendrehmomentes und/oder basierend auf Drucksensorsignalen zu erzielen. Während eines 3D-Druckprozesses werden basierend auf dem G-Code in jedem Interpolationstakt Steuergrößen für die Motoren berechnet. Hierbei wird auch berechnet, wie viel Material von dem Extrusionsaggregat in dem nächsten Interpolationstakt ausgetragen werden muss. Dieser Zielwert muss nun für die Regelgrößen, die auf die Ansteuerung der Extruderschnecke wirken, übersetzt werden. Nachfolgend soll dies anhand einer positionsgesteuerten Schnecke veranschaulicht werden.

Das globale Austragsverhalten kann anhand der signifikanten Anzahl an Stützstellen mit einer Polynomfunktion n-ten Grades, vorzugsweise 3. Grades, beschrieben werden. So gelingt es beispielsweise den gemittelten Materialaustrag in mm³/s in Abhängigkeit einer konstanten Schneckendrehzahl für einen eingeschwungenen Zustand zu beschreiben. Da die Steuergrößen in jedem Interpolationstakt berechnet werden, also z.B. alle 8 ms, kann diese Beschreibung überführt werden in eine Darstellung, die den notwendig zurückzulegenden Drehwinkel je Interpolationstakt in Abhängigkeit der resultierenden ausgetragenen Materialmenge je Interpolationstakt beschreibt. Dieses Wissen kann im 3D-Druckprozess genutzt werden, um für jeden Interpolationstakt festzulegen, um wie viel Grad die Extruderschnecke weitergedreht werden muss, so dass die geforderte Menge an Material ausgestoßen wird. Wie bereits beschrieben funktioniert diese Art der Ansteuerung nur für einen eingeschwungenen Zustand, also mindestens das Vorliegen einer konstanten Schneckendrehzahl bei einer konstanten Druckgeschwindigkeit über einen längeren Zeitraum. Geschwindigkeitsänderungen sowie das lokale, also in kurzen Zeitintervallen ggf. periodisch variierende, bleiben unberücksichtigt.

Um auch bei Geschwindigkeitsänderungen eine sehr gute Regelgüte zu erreichen, muss die Charakterisierung für veränderliche Schneckendrehzahlen in das Regelsystem einbezogen werden. Ist beispielsweise bekannt, dass die Druckgeschwindigkeit von 150 mm/s auf 30 mm/s aufgrund der Dynamikgrenzen der Kinematik abgesenkt werden wird, um eine scharfe 180° Kurve fahren zu können, bedeutet dies, dass auch die Extruderschnecke nicht weiter mit einer konstanten Drehzahl betrieben werden kann. Basierend auf einer geforderten Strangbreite sowie Stranghöhe ergeben sich aus der jeweiligen Druckgeschwindigkeit zu erreichende Austragsraten in mm³/s. Würde einfach der Stützpunkt aus dem globalen Austragsverhalten für 150 mm/s oder 30 mm/s genutzt werden, käme es zu einer Über- oder Unterextrusion. Es wird also zu viel oder zu wenig Material ausgestoßen, während die Kinematik abbremst und der Extruder wieder einen eingeschwungenen Zustand erreicht. Die dynamische Austragscharakterisierung bei Geschwindigkeitsänderungen erlaubt es nun anhand des charakterisierten Prozessfensters (Absenkung Austragsrate, Start- und Endpunkt, Schmelzedruck, Gegendruck, Material, Temperatur, ...) das Austragsverhalten geeignet für die Geschwindigkeitsänderung nachzuführen. Dabei müssen die Dynamikgrenzen von Kinematik und Austragsverhalten berücksichtigt werden, so dass es vorteilhaft sein kann, auf die Druckgeschwindigkeitsänderung und/oder Extruderschneckenansteuerung einzuwirken. Bei einem Abbremsen wie beschrieben kann beispielsweise die effektive Extruderdrehzahl über Schneckenpositionsänderungen je Interpolationstakt anhand einer Polynomfunktion ermittelt aus der Austragsratencharakterisierung in Abhängigkeit der Druckgeschwindigkeitsänderung je Interpolationstakt abgesenkt werden. Ist bekannt, dass die Austragsratenänderung nicht die Dynamik der Druckgeschwindigkeitsänderung erreicht, muss die Druckgeschwindigkeitsänderung zusätzlich in der CNC-Steuerung verlangsamt werden.

Aus der Charakterisierung des lokalen Austragsverhaltens können mathematische Modelle abgeleitet werden, die die periodisch auftretenden Änderungen in Abhängigkeit des Schneckendrehwinkels und/oder n-fachen der Schneckendrehfrequenz beschreiben. Diese mathematischen Modelle können nun im Interpolationstakt direkt oder über n-dimensionalen Kompensationstabellen auf die Ansteuerung der Extruderschnecke in der CNC-Steuerung einwirken. Ist beispielsweise bekannt, dass zwischen der Schneckenposition von 20° bis 110° ein sinusförmiger Peak in der Austragsrate auftritt, kann der ursprünglich vorgesehenen Schneckenpositionsänderung im Interpolationstakt ein Korrekturwert überlagert werden, der die Positionsänderung verlangsamt, so dass der Austragspeak abgedämpft wird. Dabei sollte das Wissen aus der geschwindigkeitsveränderlichen Austragscharakterisierung einbezogen werden, um stabile Regelparameter zu identifizieren. Die Extruderschnecke würde also auch in einem eingeschwungenen Zustand bei konstanter Druckgeschwindigkeit nicht mit einer konstanten Schneckendrehzahl sondern einer veränderlichen Schneckendrehzahl bewusst angesteuert, um auftretende Austragsvariationen zu bekämpfen.

Die dargestellten Kompensationsmechanismen bilden eine Vorsteuerung und basieren auf der vorherigen Charakterisierung des Austragsverhaltens unter relevanten Prozessrandbedingungen. Durch den installierten Drucksensor während des Druckprozesses kann es vorteilhaft sein, neben der Vorsteuerung auch eine zusätzliche Regelung verbleibender Abweichungen im Austragsverhalten zu verwenden. Da das Drucksensorsignal mit dem Volumenaustrag korreliert, können basierend auf Drucksignaländerungen Regelparameter abgeleitet werden, die auf die Schneckenansteuerung im Interpolationstakt zusätzlich wirken. Das Regelsystem besteht somit aus einer Vorsteuerung (global, lokal, geschwindigkeitsveränderlich) und einer Feedbackregelung. Je nach Prozessfenster kann es vorteilhaft sein, die Regelkomponenten unterschiedlich zu gewichten und/oder nur die Vorsteuerung bzw. Feedback-Regelung zu nutzen. Auf Grundlage der globalen Austragscharakterisierung kann eine mathematische Beziehung von mittlerem Schmelzedruck zu ausgetragener Materialmenge hergestellt werden. Somit ist es in der CNC-Steuerung in einer einfachen Ausführung möglich, einen Soll-Schmelzedruck vorzugeben und über einen P-Regler die Schneckenposition im Interpolationstakt entsprechend zu regeln. Das Regelmodell könnte ebenfalls um I- und D-Glieder ergänzt werden. In einer anderen vorteilhaften Ausführung würden die Vorsteuerungen (global und/oder lokal und/oder geschwindigkeitsveränderlich) genutzt und verbleibende Variationen im Austragsverhalten über den Schmelzedruck erfasst und mittels eines P-Reglers der Steuerung der Schneckenposition im Interpolationstakt überlagert. Eine weitere vorteilhafte Ausführung sieht zusätzlich vor, die mathematischen Modelle für die Vorsteuerungen basierend auf den erfassten Drucksensordaten während des Druckprozesses adaptieren zu können. Neben der In-line-Adaptierung der Vorsteuerungsparameter besteht zudem die Möglichkeit, signifikante Abweichungen im Austragsverhalten direkt zu detektieren und den Druckprozess zu unterbrechen, so dass zunächst eine Rekalibrierung durchgeführt werden kann.

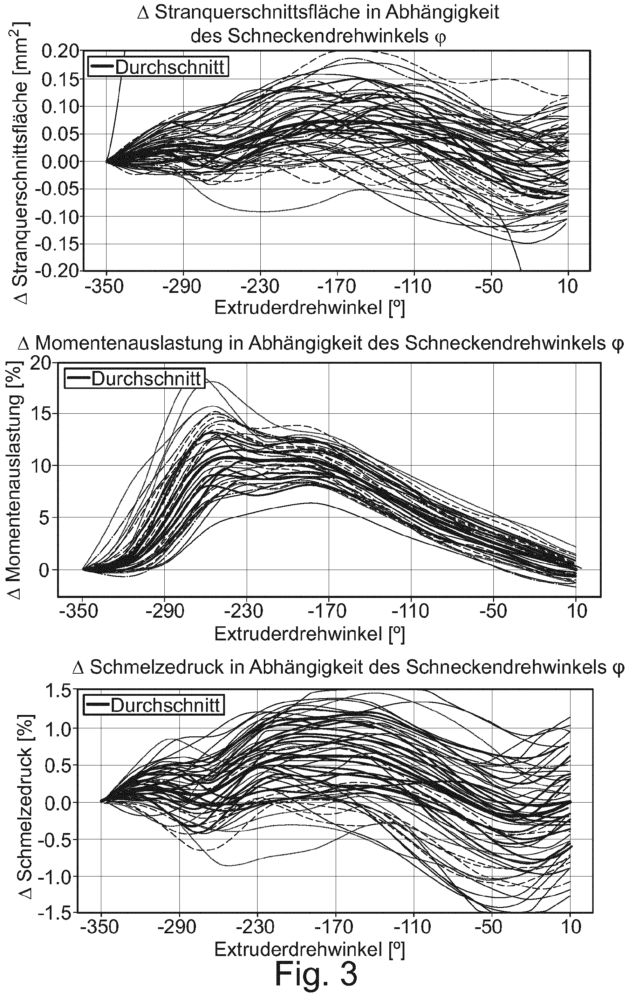

Figur 3 zeigt die Verläufe von Druck, Moment, Austragsfläche über dem Schneckendrehwinkel zur Darstellung des lokalen Austragsverhaltens. Es ist ersichtlich, dass eine charakteristische Variation über dem Schneckendrehwinkel auftritt. Die Amplituden ändern sich jedoch von Schneckenumdrehung zu Schneckenumdrehung, so dass ein adaptiver Regler zur Vorsteuerung günstig ist. Ebenfalls müsste bei einer Vorsteuerung die Reaktionszeit des Schmelzedrucks bei Geschwindigkeitsänderungen Berücksichtigung finden.

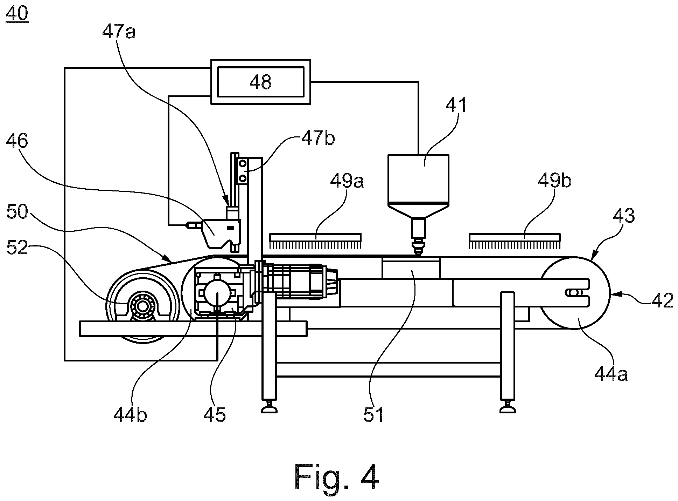

Figur 4 zeigt schematisch den prinzipiellen Aufbau einer Anlage 40 zur Charakterisierung des Austragsverhaltens einer Extrusionseinrichtung 41. Die Extrusionseinrichtung 41 bildet in diesem Beispiel ein Einschneckenextruder mit Getriebemotor und zwangsgesteuerter Granulatzuführung (siehe Figur 1), welcher über einen Drucksensor zur Erfassung des Schmelzedruckes im Austragsbereich verfügt. Die Extrusionseinrichtung 41 wird über eine Roboterkinematik in der Auftragszone positioniert, um gezielt einen gewünschten Schichtabstand einzustellen. Als Substrat 42 dient eine Polyimidfolie, die auf ein Förderband 43 als Träger aufgebracht wird. Das Förderband 43 ist über zwei Umlenkrollen 44a, 44b als kontinuierlich verfahrbarer Bandabzug aufgebaut und wird über einen regelbaren Servomotor 45 angetrieben.

Zur Vermessung der Stranggeometrie ist ein Laserliniensensor 46 auf einer horizontal und vertikal verfahrbaren Schiene 47a, 47b angeordnet, um die Position der Strangvermessung auf dem Förderband 43 einstellen zu können. Alle Sensoren und Aktoren kommunizieren zeitsynchron über eine Steuerung 48.

Das Substrat 42 kann vor dem Auftrag des schmelzflüssigen Kunststoffs auf eine Zieltemperatur aufgeheizt werden. Im Bereich des Austrags davor als auch dahinter sind Heizelemente 49a, 49b angebracht, die es ermöglichen den Bauraum gezielt in seiner Temperatur zu steuern, also beispielsweise ein gesteuertes Abkühlverhalten des Stranges 50 einzustellen. Nach der Vermessung des Stranges 50 wird das Substrat 42 mit dem applizierten Strang 50 wieder vom Träger 43 abgezogen.

Im Bereich der Extrusionsunterlage 51 wird mithilfe der Extrusionseinrichtung 41 das druckfähige Material in Form eines Strangs 50 ausgegeben. Das Substrat 42 aufgrund der Bewegung des Förderbandes 43 kontinuierlich bewegt, sodass eine Relativbewegung zwischen der Extrusionseinrichtung 41 und dem Substrat 42 entsteht. Mithilfe des Laserlichtschnittsensors 46 wird dann die Stranggeometrie vermessen und für einen entsprechenden Strangabschnitt das Austragsvolumen ermittelt.

Anschließend wird der Strang 50 durch einen Strangabzug 52 von dem Förderband 43 entfernt, indem die auf dem Förderband befindliche Folie als Substrat 42 abgezogen wird. Durch einen nicht dargestellten Vorrat dieser Folie wird bei der Bewegung des Förderbandes 43 kontinuierlich neues, frisches Substrat auf das Förderband 43 aufgebracht.

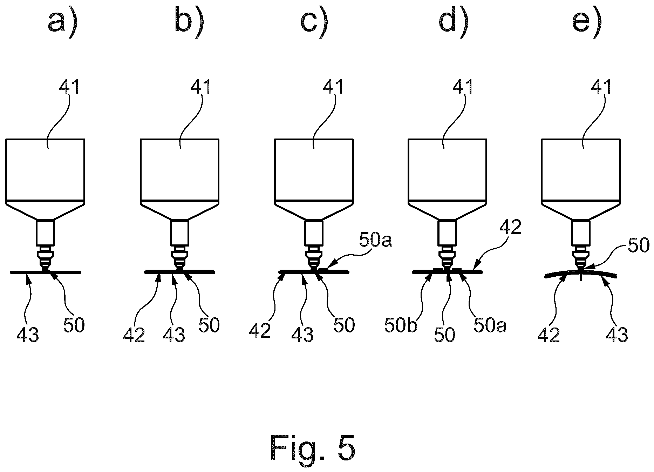

Figur 5 zeigt unterschiedliche Ausprägungsformen des Substrates. In der ersten Ausprägungsform a) wird der Strang 50 auf ein Förderband 43 aufgebracht, welches gleichzeitig das Substrat bildet. Einen zusätzlichen Werkstoff zwischen dem Förderband 43 und dem Strang 50 ist somit nicht erforderlich. Mithilfe des Strangabzuges 52 (siehe Figur 4) wird dann der gesamte Strang abgezogen.

In der zweiten Ausprägungsform b) befindet sich auf dem Förderband 43 ein Substrat 42, auf denen der Strang 50 durch die Extrusionseinrichtung 41 gedruckt wird. Das Förderband 43 dient dabei als Träger des Substrates 42.

Die dritte Ausprägungsform c) zeigt den Auftrag eines Strangs 50 neben einem bereits abgelegten Strang 50a. Hierdurch kann das Ablegen von nebeneinanderliegenden Strängen simuliert werden, wobei auch hier das druckfähige Material auf ein Substrat 42 aufgedruckt wird, welches auf einem Förderband 43 als Träger liegt.

Die vierte Ausprägungsform d) zeigt die Weiterentwicklung der dritten Ausprägungsform c), wobei hier der Strang 50 zwischen zwei zuvor abgelegten Strängen 50a, 50b abgelegt wird.

Schließlich zeigt die fünfte Ausprägungsform e) die Ablage des Stranges 50 auf ein gekrümmtes Substrat 42, welches auf einem gekrümmten Förderband 43 aufliegt.

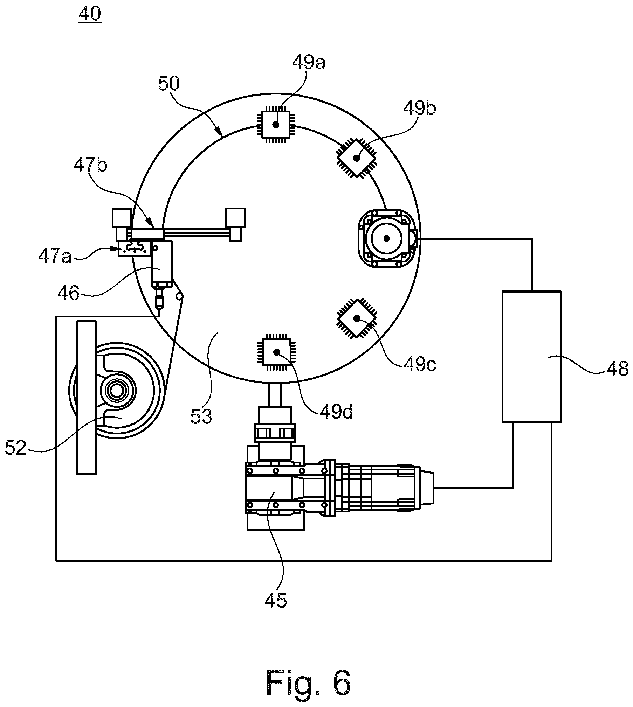

Neben einem Bandabzug (siehe Figur 4) ist es auch denkbar, einen Rundtisch 53 zu nutzen, wie schematisch in Figur 6 gezeigt ist, um gezielt eine Relativgeschwindigkeit zwischen Austragsdüse des Extruders 41 und Substrat 42 einzustellen damit eine Druckgeschwindigkeit zu simulieren.

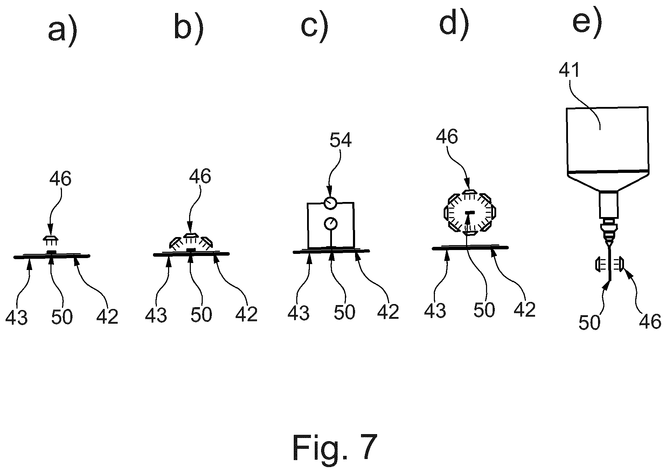

Die Vermessung der Stranggeometrie wird eine geeignete sensorische Einrichtung verwendet, beispielsweise optisch oder tastend. Eine vorteilhafte Ausführungsform nutzt einen Linienlaser um eine ausreichende Anzahl von Höhenpunkten über die Strangbreite zu erfassen, so dass Strangbreite, Stranghöhe und Strangquerschnitt ermittelt werden können. Je nach Stranggeometrie kann es zudem vorteilhaft, sein mehrere Linienlaser gleichzeitig winklig zueinander angeordnet zu nutzen, um die Stranggeometrie besser zu erfassen. Auch könnten an Stelle von Linienlasern optische Kameras mit Lichtprojektion, tastende Elemente, Mikro-CT, Röntgengeräte oder ähnliche genutzt werden. Ebenfalls könnte es vorteilhaft sein den Strang vor der Vermessung vom Substrat zu lösen, so dass dieser vollumfänglich vermessen werden kann. Sollte für eine hinreichende Charakterisierung des Austragsverhaltens das globale Austragsverhalten genügen, könnte mit dem Extruder auch nicht auf ein Substrat sondern in die Luft extrudiert werden, so dass nachfolgend der erstarrte Strang geeignet durch die Einrichtung zur Strangvermessung geführt wird. Verschiedene Ausprägungsformen der Vermessung sind dabei in Figur 7 gezeigt. In der ersten Ausprägungsform a) wird der Strang 50, der auf einem Substrat 42 aufgedruckt wurde, wobei das Substrat 42 auf einem Förderband 43 als Träger liegt, mithilfe eines optischen Sensors, beispielsweise eines Laserlichtschnittsensors 46 vermessen. In der zweiten Ausprägungsform b) sind dabei mehrere optische Sensoren 46 vorgesehen, um die Geometrie vollständig zu erfassen.

In der dritten Ausprägungsform c) ist ein taktiler Sensor 54 vorgesehen, der die Stranggeometrie tastend erfasst.

In der vierten Ausprägungsform d) wird der Strang 50 von dem Substrat 42 abgelöst und durch einen Ring aus optischen Sensoren 46 geführt, wodurch eine allumfassende Stranggeometrie abgebildet werden kann.

In der vierten Ausprägungsform e) wird der Strang 50 durch die Extrusionseinrichtung 41 in die Luft extrudiert, wobei durch entsprechende optische Sensoren 46 die Stranggeometrie erfasst wird. Bei dieser Ausführungsform bedarf es keines Substrates.

### Bezugszeichenliste

10 Extrusionseinrichtung
11 Extruderzylinder
12 Extrusionsschnecke
13 Austragsdüse
14 Motor
15 Anbindungsgeometrie
16 Materialzuführung
17 Vorratsbehälter
18 Zuführtrichter
19 Zuführschnecke
20 Einzugszone
21 Zuführschneckenmotor
22 Drucksensor
30 Steuereinheit
31 Recheneinheit
32 lokale Austragscharakteristik
33 globale Austragscharakteristik
34 dynamische Austragscharakteristik
41 Extrusionseinrichtung
42 Substrat
43 Förderband/Träger
44 Umlenkrollen
45 Motor des Förderbandes
46 Sensorik/Laserlichtschnittsensor
47 Einstellschienen
48 Steuerung/Auswerteeinheit
49 Heizung
50 Strang
51 Extrusionsunterlage
52 Strangabzug
53 Rundtisch
54 Sensorik/taktiler Sensor

## Patentansprüche

1. Verfahren zum Erstellen einer lokalen Austragscharakteristik (32) einer Extrusionseinrichtung (10, 41), wobei die Extrusionseinrichtung (10, 41) mittels einer durch einen Motor (14) angetriebenen Extrusionsschnecke (12) ein druckfähiges Material an einer Austragsdüse (13) ausgibt, um eine dreidimensionale Struktur aus dem druckfähigen Material zu bilden, und wobei die lokale Austragscharakteristik (32) ein Austragsvolumen des druckfähigen Materials aus der Austragsdüse (13) in Abhängigkeit von einem Drehwinkel der Extrusionsschnecke (12) und/oder einem Vielfachen davon definiert, mit den Schritten:
- Ausgeben des druckfähigen Materials durch Ansteuerung des Motors (14) derart, dass die Extrusionsschnecke (12) eine im Wesentlichen konstante Drehgeschwindigkeit aufweist;
- kontinuierliches Erfassen einer Drehwinkelinformation der Extrusionsschnecke (12) und Hinterlegen der Drehwinkelinformation in einem digitalen Datenspeicher;
- kontinuierliches Erfassen des strangförmig ausgegebenen Materials mittels einer Sensorik (46, 54) umfassend mindestens einen Sensor und Ermitteln des Austragsvolumens des strangförmig ausgegebenen Materials für einen gewissen Strangabschnitt;
- kontinuierliches Zuordnen des ermittelten Austragsvolumen zu einer hinterlegten Drehwinkelinformation der Extrusionsschnecke (12), und
- Erstellen einer lokalen Austragscharakteristik (32) basierend auf einer Vielzahl von hinterlegten Drehwinkelinformationen und ihren jeweils zugeordneten Austragsvolumen.

2. Verfahren zum Erstellen einer dynamischen Austragscharakteristik (34) einer Extrusionseinrichtung (10, 41), wobei die Extrusionseinrichtung (10, 41) mittels einer durch einen Motor (14) angetriebenen Extrusionsschnecke (12) ein druckfähiges Material an einer Austragsdüse (13) ausgibt, um eine dreidimensionale Struktur aus dem druckfähigen Material zu bilden, und wobei die dynamische Austragscharakteristik (34) ein Austragsvolumen des druckfähigen Materials aus der Austragsdüse (13) in Abhängigkeit von einer Drehgeschwindigkeitsänderung der Extrusionsschnecke (12) definiert, mit den Schritten:
- Ausgeben des druckfähigen Materials durch Ansteuerung des Motors (14) derart, dass die Extrusionsschnecke (12) eine Drehgeschwindigkeitsänderung von einer ersten Drehgeschwindigkeit hin zu einer zweiten Drehgeschwindigkeit aufweist;
- kontinuierliches Erfassen einer Drehwinkelinformation der Extrusionsschnecke (12) während der Drehgeschwindigkeitsänderung und Hinterlegen der Drehwinkelinformation in einem digitalen Datenspeicher;
- kontinuierliches Erfassen des strangförmig ausgegebenen Materials mittels einer Sensorik (46, 54) umfassend mindestens einen Sensor und Ermitteln des Austragsvolumens des strangförmig ausgegebenen Materials für einen gewissen Strangabschnitt;
- kontinuierliches Zuordnen des ermittelten Austragsvolumen zu einer hinterlegten Drehwinkelinformation der Extrusionsschnecke (12), und
- Erstellen einer dynamischen Austragscharakteristik (34) basierend auf einer Vielzahl von hinterlegten Drehwinkelinformationen und ihren jeweils zugeordneten Austragsvolumen.

3. Verfahren zum Erstellen einer globalen Austragscharakteristik (33) einer Extrusionseinrichtung (10, 41), wobei die Extrusionseinrichtung (10, 41) mittels einer durch einen Motor (14) angetriebenen Extrusionsschnecke (12) ein druckfähiges Material an einer Austragsdüse (13) ausgibt, um eine dreidimensionale Struktur aus dem druckfähigen Material zu bilden, und wobei die globale Austragscharakteristik (33) ein Austragsvolumen des druckfähigen Materials aus der Austragsdüse (13) unabhängig von dem Drehwinkel der Extrusionsschnecke (12) gemittelt über einen gewissen Austragszeitraum in Abhängigkeit von einem Drehwinkel der Extrusionsschnecke (12) und/oder einem Vielfachen davon definiert, mit den Schritten:
- Ausgeben des druckfähigen Materials durch Ansteuerung des Motors (14) derart, dass die Extrusionsschnecke (12) eine im Wesentlichen konstante Drehgeschwindigkeit aufweist;
- kontinuierliches Erfassen des strangförmig ausgegebenen Materials mittels einer Sensorik (46, 54) umfassend mindestens einen Sensor und Ermitteln des Austragsvolumens des strangförmig ausgegebenen Materials für einen gewissen Strangabschnitt und Hinterlegen der kontinuierlich erfassten Austragsvolumen; und
- Erstellen einer globalen Austragscharakteristik (33) basierend auf der Vielzahl von hinterlegten Austragsvolumen.

4. Verfahren nach den Ansprüchen 1 bis 3, **dadurch gekennzeichnet, dass** eine lokale Austragscharakteristik (32) und eine dynamische Austragscharakteristik (34) und eine globale Austragscharakteristik (33) erstellt wird, wobei die lokale Austragscharakteristik (32) und die dynamische Austragscharakteristik (34) und die globale Austragscharakteristik (33) zu einer gemeinsamen Austragscharakteristik (32, 33, 34) zusammengeführt werden.

5. Verfahren nach einem der vorhergehenden Ansprüche, **dadurch gekennzeichnet, dass** mittels eines Drucksensors (22) angeordnet nach der Extrusionsschnecke (12) eine Materialdruckinformation erfasst wird, wobei die Materialdruckinformationen zusätzlich in der jeweiligen Austragscharakteristik (32, 33, 34) hinterlegt werden.

6. Verfahren nach einem der vorhergehenden Ansprüche, **dadurch gekennzeichnet, dass** die jeweilige Austragscharakteristik (32, 33, 34) derart erstellt wird, dass das entsprechende Austragsvolumen mittels einer polynominalen und/oder tabellarischen Beschreibung definiert wird.

7. Verfahren nach einem der vorhergehenden Ansprüche, **dadurch gekennzeichnet, dass** das strangförmig ausgegebene Material
- mittels mindestens eines optischen Sensors, insbesondere mittels mindestens einer Kamera,
- mittels mindestens eines taktilen Sensors (54), und/oder
- mittels mindestens eines Laserlichtschnittsensors (46),
erfasst wird.

8. Verfahren nach einem der vorhergehenden Ansprüche, **dadurch gekennzeichnet, dass** das druckfähige Material auf ein Substrat (42) abgelegt wird, wobei zwischen dem Substrat (42) und der Austragsdüse (13) eine Relativbewegung ausgeführt wird, oder dass das druckfähige Material in die Luft extrudiert wird.

9. Verfahren nach Anspruch 7, **dadurch gekennzeichnet, dass** das druckfähige Material auf ein als Förderband (43) oder als Drehtisch ausgebildetes Substrat (42) abgelegt wird, wobei das Förderband (43) oder der Drehtisch gegenüber der Extrusionseinrichtung (10, 41) bewegt wird.

10. Vorrichtung eingerichtet zur Durchführung des Verfahrens nach einem der vorhergehenden Ansprüche.

11. Verfahren zur Herstellung einer dreidimensionalen Struktur aus mindestens einem druckfähigen Material mittels einer Extrusionseinrichtung (10, 41), wobei das Verfahren die folgenden Schritte umfasst:
- Ansteuern eines Motors (14) zur Steuerung (48) der Drehung einer Extrusionsschnecke (12) der Extrusionseinrichtung (10, 41), um das druckfähige Material von einer Materialzuführung (16) hin zu einer Austragsdüse (13) zum Ausgeben des druckfähigen Materials zu fördern;
**gekennzeichnet durch**
- Erstellen einer Austragscharakteristik (32, 33, 34) gemäß dem Verfahren nach einem der Ansprüche 1 bis 9; und
- Herstellen der dreidimensionalen Struktur mittels der Extrusionseinrichtung (10, 41) unter Verwendung der erstellten Austragscharakteristik (32, 33, 34).

12. Anlage zum Herstellen von dreidimensionalen Strukturen aus mindestens einem druckfähigen Material, wobei die Anlage aufweist:
- eine Extrusionseinrichtung (10, 41) mit einer Extrusionsschnecke (12) zum Fördern des mindestens einen druckfähigen Materials von einer Materialzuführung (16) hin zu einer Austragsdüse (13) zum Ausgeben des mindestens einen druckfähigen Materials, einem Motor (14) zum drehbaren Antreiben der Extrusionsschnecke (12) sowie einer Steuereinheit (30), die zum Steuern der Drehgeschwindigkeit der Extrusionsschnecke (12) durch Ansteuerung des Motors (14) eingerichtet ist, und
- einer Vorrichtung gemäß Anspruch 9 zur Durchführung des Verfahrens nach einem der Ansprüche 1 bis 8,
- wobei die Anlage eingerichtet ist, vor der Herstellung einer dreidimensionalen Struktur eine lokale Austragscharakteristik (32), eine dynamische Austragscharakteristik (34) und/oder eine globale Austragscharakteristik (33) mittels der Vorrichtung zu erstellen und die jeweilige erstellte Austragscharakteristik (32, 33, 34) zur Steuerung (48) des Materialaustrags zu verwenden.
